# EUROPEAN PATENT APPLICATION

(11) **EP 4 667 437 A1**
(43) Date of publication of application: **24.12.2025**
(21) Application number: 24757023.7
(22) Date of filing: 09.01.2024
(51) Int. Cl.: C04B 26/06, C04B 14/36, C04B 20/00, C04B 24/04

(54) **COMPOSITION FOR ARTIFICIAL MARBLE AND ARTIFICIAL MARBLE MANUFACTURED FROM SAME**

(30) Priority: 17.02.2023 KR 20230021757
(71) Applicant: LOTTE CHEMICAL CORPORATION, Seoul 05551 (KR)
(72) Inventor: JEONG, Doo Kyo, Uiwang-si, Gyeonggi-do 16073 (KR)
(74) Representative: Germain Maureau
(86) International application number: PCT/KR2024/000378
(87) International publication number: WO 2024/172292

(57) **Abstract**

Provided is a composition for an artificial marble, the composition including: (A) an acrylic resin syrup; (B) a first aluminum hydroxide having an average particle diameter of 75 to 92 µm; (C) a second aluminum hydroxide having an average particle diameter of 20 to 35 µm; and (D) tetraethylene glycol diacrylate.

## Description

### [Technical Field]

A composition for an artificial marble and an artificial marble manufactured therefrom are disclosed.

### [Background Art]

An artificial marble has recently been widely used as an architectural interior material and is largely classified into two types such as acrylic and unsaturated polyester-based ones depending on a base resin used therewith. The acrylic artificial marble is used for various purposes due to its advantages such as subtle transparency from the resin itself, luxurious texture, excellent weather resistance, and the like and thus increasingly demanded and extensively used, for example, as a material for sink tops, vanity tops, various countertops used as bank and general store reception desks and the like, interior wall materials, various interior sculptures, and the like

As the uses of artificial marble are diversifying, an artificial marble with various patterns and functions is being developed, and various methods for improving its properties also are being discussed to suit its various uses.

An example of an artificial marble, an artificial marble manufactured from an acrylic resin has advantages of excellent appearance and excellent processability as well as thermoformability. The acrylic artificial marble uses an acrylic monomer as a crosslinking agent for curing, and currently, a difunctional acrylic monomer such as ethylene glycol dimethacrylate or a trifunctional acrylic monomer such as trimethylolpropane trimethacrylate is used as the acrylic monomer.

However, when the acrylic monomer is used, there is no problem under general thermoforming conditions but a disadvantage of being not moldable due to cracks in curved areas during three-dimensional bowling molding or deep molding.

In order to overcome this disadvantage, a method of using a linear high molecular weight acrylic monomer as the crosslinking agent has been suggested, but when the linear high molecular weight acrylic monomer is used as the crosslinking agent, there are problems such as plate sagging during the belt casting for continuous production, make the production difficult, and plate deformation.

Accordingly, there is a need to develop a composition for an artificial marble having no thermoforming problems even under the above thermoforming conditions.

### Prior Art

Patent Document 1: KR 10-2207223 B1

### [Disclosure]

### [Technical Problem]

Provided are a composition for an artificial marble having excellent thermoformability and an artificial marble manufactured therefrom.

### [Technical Solution]

According to an embodiment, provided is a composition for an artificial marble which includes (A) an acrylic resin syrup; (B) a first aluminum hydroxide having an average particle diameter of 75 to 92 µm; (C) a second aluminum hydroxide having an average particle diameter of 20 to 35 µm; and (D) tetraethylene glycol diacrylate.

The (A) acrylic resin syrup may include an acrylic monomer and a polymer of the acrylic monomer.

The (A) acrylic resin syrup may include a polymethylmethacrylate resin and a methylmethacrylate resin.

A concentration of the polymethylmethacrylate resin may be 20 to 29 wt% based on 100 wt% of the (A) acrylic resin syrup.

A weight average molecular weight of the polymethylmethacrylate resin may be 50,000 to 150,000 g/mol.

A weight ratio of the (B) first aluminum hydroxide to the (C) second aluminum hydroxide may be 7:3 to 9:1.

The composition for an artificial marble may include, based on 100 wt% of the composition for an artificial marble, 30 to 40 wt% of the (A) acrylic resin syrup; 40 to 60 wt% of the (B) first aluminum hydroxide having an average particle diameter of 75 to 92 µm; 8 to 20 wt% of the (C) second aluminum hydroxide having an average particle diameter of 20 to 35 µm; and 0.05 to 0.2 wt% of the (D) tetraethylene glycol diacrylate.

The composition for an artificial marble may further include at least one additive selected from an initiator, a coupling agent, a surfactant, a curing accelerator, an antistatic agent, an antimicrobial agent, a defoaming agent, a dispersing agent, a molecular weight regulator, an ultraviolet absorber, and a colorant.

According to an embodiment, an artificial marble manufactured from the composition for an artificial marble is provided.

The artificial marble may have an angle of 0 between folded sheets as measured by heating a specimen measuring 400 mm in length, 50 mm in width, and 12 mm in thickness in an oven at a temperature of 150 °C for 15 minutes and then pressing it with a press for 3 minutes until it is completely folded in half.

The artificial marble may have an elongation of greater than or equal to 23% as measured according to ASTM D638.

### [Advantageous Effects]

A composition for an artificial marble according to an embodiment and an artificial marble manufactured therefrom have significantly superior thermoformability and elongation properties compared to existing artificial marble.

### [Description of the Drawings]

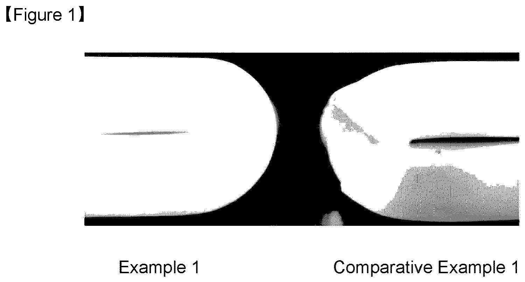

FIG. 1 is a photograph comparing the results of a thermoforming test of artificial marbles of Example 1 and Comparative Example 1.

### [Best Mode]

Hereinafter, embodiments of the present invention will be described in detail. However, these embodiments are exemplary, and this disclosure is not limited thereto.

In the present invention, when specific definition is not otherwise provided, the average particle diameter is a volume average diameter and means a Z-average particle diameter measured using a dynamic light scattering analysis device.

In the present invention, when specific definition is not otherwise provided, (meth)acrylate refers to acrylate or methacrylate. Also, (meth)acrylic acid alkyl ester refers to acrylic acid alkyl ester or methacrylic acid alkyl ester, and (meth)acrylic acid ester refers to acrylic acid ester or methacrylic acid ester.

In the present specification, when a definition is not otherwise provided, "copolymerization" may refer to block copolymerization, random copolymerization, graft copolymerization, or alternating copolymerization, and "copolymer" refers to a block copolymer, a random copolymer, a graft copolymer, or an alternating copolymer.

According to an embodiment, provided is a composition for an artificial marble including (A) an acrylic resin syrup; (B) a first aluminum hydroxide having an average particle diameter of 75 to 92 µm; (C) a second aluminum hydroxide having an average particle diameter of 20 to 35 µm; and (D) tetraethylene glycol diacrylate.

Hereinafter, each component included in the composition for an artificial marble is described in detail.

### (A) Acrylic Resin Syrup

In an embodiment, the (A) acrylic resin syrup is a basic component of a composition for an artificial marble and can provide excellent appearance characteristics, processability, and thermoformability to the composition for an artificial marble.

In an embodiment, the (A) acrylic resin syrup may include an acrylic monomer and a polymer of the acrylic monomer. That is, the (A) acrylic resin syrup may be one in which an acrylic monomer and a polyacrylate, which is a polymer thereof, are dissolved.

As the acrylic monomer, methyl (meth)acrylate, ethyl (meth)acrylate, isopropyl (meth)acrylate, n-butyl (meth)acrylate, 2-ethylhexyl (meth)acrylate, etc. may be used.

In an embodiment, the (A) acrylic resin syrup may include a methyl methacrylate resin and a polymethyl methacrylate resin.

The polymethyl methacrylate resin may be included in a concentration of 20 to 29 wt%, based on 100 wt% of the (A) acrylic resin syrup, and specifically, the polymethyl methacrylate resin may be included in a concentration of 20 wt% or more, 21 wt% or more, 22 wt% or more, 23 wt% or more, 24 wt% or more, 25 wt% or more, 26 wt% or more, 27 wt% or more, or 28 wt% or more, and 29 wt% or less, 28 wt% or less, 27 wt% or less, 26 wt% or less, 25 wt% or less, 24 wt% or less, 23 wt% or less, 22 wt% or less, or 21 wt% or less, based on 100 wt% of the (A) acrylic resin syrup. When the polymethyl methacrylate resin is included in the weight range, the moldability and physical properties of the composition for an artificial marble may be improved.

A weight average molecular weight of the polymethyl methacrylate resin may be 50,000 to 150,000 g/mol, for example, 70,000 to 130,000 g/mol. Within the above weight average molecular weight range, the processability of the composition for an artificial marble may be improved.

A viscosity of the (A) acrylic resin syrup may be 500 to 3,000 cps or 800 to 2,000 cps. Within the above viscosity range, the mechanical properties and processability of the composition for an artificial marble may be improved.

The (A) acrylic resin syrup may be included in an amount of 30 wt% or more, 31 wt% or more, 32 wt% or more, 33 wt% or more, 34 wt% or more, 35 wt% or more, 36 wt% or more, 37 wt% or more, 38 wt% or more, or 39 wt% or more, and 40 wt% or less, 39 wt% or less, 38 wt% or less, 37 wt% or less, 36 wt% or less, 35 wt% or less, 34 wt% or less, 33 wt% or less, 32 wt% or less, or 31 wt% or less, based on 100 wt% of the composition for an artificial marble. In an embodiment, the (A) acrylic resin syrup may be included in an amount of 30 to 40 wt% based on 100 wt% of the composition for an artificial marble. Within the above weight range, the appearance characteristics, processability and thermoformability of the composition for an artificial marble and the artificial marble manufactured therefrom may be improved.

### (B) First Aluminum Hydroxide Having Average Particle Diameter of 75 to 92 mm and (C) Second Aluminum Hydroxide Having Average Particle Diameter of 20 to 35 µm

In an embodiment, the (B) first aluminum hydroxide and (C) second aluminum hydroxide can provide mechanical properties and a natural stone texture to the composition for an artificial marble, while reinforcing the low flame retardancy due to the flammable acrylic resin.

The average particle diameter range of the (B) first aluminum hydroxide may be 75 to 92 µm, for example, 80 to 92 µm, for example, 85 to 92 µm, for example, 75 to 90 µm, for example, 80 to 90 µm, for example, 85 to 90 µm, for example, 75 to 85 µm, for example, 80 to 85 µm, for example, 75 to 80 µm.

The average particle diameter range of the (C) second aluminum hydroxide may be 20 to 35 µm, for example 25 to 35 µm, for example 30 to 35 µm, for example 20 to 30 µm, for example 25 to 30 µm, for example 20 to 25 µm.

Within the above average particle diameter range, the appearance characteristics and sandability of the composition for an artificial marble simultaneously including the (B) first aluminum hydroxide and the (C) second aluminum hydroxide and the artificial marble manufactured therefrom may be improved.

The (B) first aluminum hydroxide may be included in an amount of 40 wt% or more, 41 wt% or more, 42 wt% or more, 43 wt% or more, 44 wt% or more, 45 wt% or more, 46 wt% or more, 47 wt% or more, 48 wt% or more, 49 wt% or more, 50 wt% or more, 51 wt% or more, 52 wt% or more, 53 wt% or more, 54 wt% or more, 55 wt% or more, 56 wt% or more, 57 wt% or more, 58 wt% or more, or 59 wt% or more, and 60 wt% or less, 59 wt% or less, 58 wt% or less, 57 wt% or less, 56 wt% or less, 55 wt% or less, 54 wt% or less, 53 wt% or less, 52 wt% or less, 51 wt% or less, 50 wt% or less, 49 wt% or less, 48 wt% or less, 47 wt% or less, 46 wt% or less, 45 wt% or less, 44 wt% or less, 43 wt% or less, 42 wt% or less, or 41 wt% or less, based on 100 wt% of the composition for an artificial marble, and in an embodiment, the (B) first aluminum hydroxide may be included in an amount of 40 to 60 wt% based on 100 wt% of the composition for an artificial marble.

The (C) second aluminum hydroxide may be included in an amount of 8 wt% or more, 9 wt% or more, 10 wt% or more, 11 wt% or more, 12 wt% or more, 13 wt% or more, 14 wt% or more, 15 wt% or more, 16 wt% or more, 17 wt% or more, 18 wt% or more, or 19 wt% or more, and 20 wt% or less, 19 wt% or less, 18 wt% or less, 17 wt% or less, 16 wt% or less, 15 wt% or less, 14 wt% or less, 13 wt% or less, 12 wt% or less, 11 wt% or less, 10 wt% or less, or 9 wt% or less, based on 100 wt% of the composition for an artificial marble, and in an embodiment, the (C) second aluminum hydroxide may be included in an amount of 8 to 20 wt%, based on 100 wt% of the composition for an artificial marble.

In an embodiment, a weight ratio of the (B) first aluminum hydroxide to the (C) second aluminum hydroxide may be 7:3 to 9:1, for example 7.5:2.5 to 9:1, for example 8:2 to 9:1, for example 8.5:1.5 to 9:1, for example 7:3 to 8.5:1.5, for example 7:3 to 8:2, for example 7:3 to 7.5:2.5, for example 7.5:2.5 to 8.5:1.5, for example 7.5:2.5 to 8:2, or for example 8:2 to 8.5:1.5. Within the above weight range, the mechanical properties and flame retardancy of the composition for an artificial marble and the artificial marble manufactured therefrom may be improved.

### (D) Tetraethylene Glycol Diacrylate

In an embodiment, the (D) tetraethylene glycol diacrylate may serve as a crosslinking agent in the composition for an artificial marble, thereby improving the thermoformability and elongation of the composition for an artificial marble and the artificial marble manufactured therefrom.

The (D) tetraethylene glycol diacrylate may be included in an amount of 0.05 to 0.2 wt%, for example, 0.05 to 0.1 wt%, for example, 0.05 to 0.15 wt%, for example, 0.1 to 0.2 wt%, for example, 0.15 to 0.2 wt%, based on 100 wt% of the composition for an artificial marble. Within the above weight range, the thermoformability and elongation of the composition for an artificial marble and the artificial marble manufactured therefrom can be excellent.

### (E) Other Additives

The composition for an artificial marble according to an embodiment may further include, in addition to the components (A) to (D), one or more additives necessary to achieve a balance between the respective properties or depending on the final use of the composition for an artificial marble.

Specifically, as the additives, an initiator, a coupling agent, a surfactant, a curing accelerator, an antistatic agent, an antibacterial agent, a defoaming agent, a dispersing agent, a molecular weight regulator, an ultraviolet absorber, a colorant, etc. may be used, and these can be used alone or in a combination of two or more.

These additives may be appropriately included within a range that does not impair the properties of the composition for an artificial marble, and specifically, may be included in an amount of 20 parts by weight or less based on 100 parts by weight of the combined components (A) to (D), but are not limited thereto.

According to an embodiment, artificial marble may be manufactured by mixing the aforementioned components to prepare an artificial marble slurry, then spraying the slurry into a molding cell and then curing it using a conventional method.

Meanwhile, the artificial marble according to an embodiment may be further sanded after the aforementioned curing process. In an embodiment, the sanding treatment may include sanding the cured artificial marble using sandpaper having a grit size of #320. This allows the sanded artificial marble to have a smooth and superior appearance.

According to an embodiment, an artificial marble manufactured from the composition for an artificial marble may be provided.

The artificial marble may have an angle of 0 between the folded sheets as measured by heating a specimen measuring 400 mm in length, 50 mm in width, and 12 mm in thickness in an oven at a temperature of 150 °C for 15 minutes and then pressing it with a press for 3 minutes until it is completely folded in half.

The artificial marble may have an elongation of greater than or equal to 23% as measured according to ASTM D638.

### [Mode for Invention]

Hereinafter, the present invention is illustrated in more detail with reference to examples and comparative examples. However, the following examples and comparative examples are provided for the purpose of descriptions and the present invention is not limited thereto.

### Examples 1 to 4 and Comparative Examples 1 to 7

Each composition for an artificial marble according to Examples 1 to 4, and Comparative Examples 1 to 7 was prepared according to a content ratio of components shown in Table 1.

After adding the components in each content shown in Table 1 and mixing them with a mixer and then, supplying the mixture in the form of sheet on a loading plate to mold it into a plate, the plate was placed in an oven and cured at 80 °C for 30 minutes and then, sanded with a sandpaper with a grit size of #320, completing an artificial marble specimen.

In Table 1, the components (A) to (D) were expressed by wt% based on 100 wt% of each artificial marble.

**(Table 1)**

| | Ex. 1 | Ex. 2 | Ex. 3 | Ex. 4 | Comp . Ex. 1 | Comp . Ex. 2 | Comp . Ex. 3 | Comp . Ex. 4 | Comp . Ex. 5 | Comp . Ex. 6 | Comp . Ex. 7 |
|---|---|---|---|---|---|---|---|---|---|---|---|
| (A) | 32 | 38 | 38 | 38 | 28 | 45 | 38 | 38 | 38 | 33 | 38 |
| (B) | 51 | 47 | 53 | 47 | 53 | 41.3 | 15 | 58.9 | 47 | 51 | 47 |
| (C) | 17 | 15 | 9 | 15 | 19 | 13.7 | 47 | 3.1 | 15 | 16 | 15 |
| (D-1) | 0.1 | 0.1 | 0.1 | 0.2 | 0.1 | 0.1 | 0.1 | 0.1 | 0.5 | | |
| (D-2) | | | | | | | | | | 0.2 | |
| (D-3) | | | | | | | | | | | 0.5 |

Each component in Table 1 is described as follows.

### (A) Acrylic Resin Syrup

Methylmethacrylate (MMA) made by Lotte Chemical Corp. and polymethylmethacrylate (PMMA) made by Arkema Inc. were respectively used. About 27 wt% of the polymethylmethacrylate (PMMA) was contained in a syrup.

### (B) First Aluminum Hydroxide

Aluminum hydroxide with an average particle diameter (D50) of 75 to 92 µm (HC-110KK, CHALCO Shandong Advanced Material Co., Ltd.) was used.

### (C) Second Aluminum Hydroxide

Aluminum hydroxide with an average particle diameter (D50) of 20 to 35 µm (CW-325LV, Sumitomo Chemical Co., Ltd.) was used.

### (D-1) Tetraethylene Glycol Diacrylate

TTEGDA (tetraethylene glycol diacrylate) made by Miwon Specialty Chemical Co., Ltd. was used.

### (D-2) Trimethylolpropane trimethacrylate

TMPTMA (trimethylolpropane trimethacrylate) made by Miwon Specialty Chemical Co., Ltd. was used.

### (D-3) Polyethylene glycol di(meth)acrylate monomer

PEG400DA (polyethylene glycol 400 diacrylate) made by Miwon Specialty Chemical Co., Ltd. was used.

### Experimental Example

The experiment results are shown in Table 2.

### (1) Thermoformability

Each of the 12 mm-thick artificial marble plates was cut to prepare a specimen with a length of 400 mm and a width of 50 mm, which was placed in an oven at 150 °C and allowed to stand for 15 minutes, taken therefrom dispose it on a 400 mm (width) × 400 mm (length) manual and then, completely folded by tightening a handle on top of the press. After 3 minutes, an angle (unit: R) between folded sheets was measured. The smaller angle between sheet, that is, the closer to 0, the more excellent thermoformability, but when the sheets were folded and broken, thermoformability was not measured.

### (2) Degree of Elongation and Elongation

The specimens were measured with respect to degree of elongation and elongation according to ASTM D638.

**(Table 2)**

| | Ex. 1 | Ex. 2 | Ex. 3 | Ex. 4 | Comp. Ex. 1 | Comp. Ex. 2 | Comp . Ex. 3 | Comp . Ex. 4 | Comp . Ex. 5 | Comp . Ex. 6 | Comp . Ex. 7 |
|---|---|---|---|---|---|---|---|---|---|---|---|
| Therm oforma bility | 0 R | 0 R | 0 R | 0 R | - (unme asurab le) | - (unme asurab le) | 6 R | 15 R | - (unme asura ble) | - (unme asura ble) | 6R |
| Degre e of elonga tion (mm) | 50 | 52. 4 | 51. 8 | 54. 1 | -(non-formab le) | -(non-formab le) | 45 | 32.1 | -(non-forma ble) | 24.5 | 42 |
| Elonga tion | 25. 0 | 26. 2 | 25. 9 | 27. 1 | - | - | 22.5 | 16.1 | - | 12.4 | 20.7 |
| (%) | | | | | | | | | | | |

Referring to Tables 1 and 2, it was confirmed that an artificial marble having excellent thermoformability and elongation properties was realized by using a composition for an artificial marble including (A) an acrylic resin syrup, (B) a first aluminum hydroxide having an average particle diameter of 75 to 92 µm; (C) a second aluminum hydroxide having an average particle diameter of 20 to 35 µm; and (D) tetraethylene glycol diacrylate.

In particular, the compositions for an artificial marble according to the examples, which used (D-1) tetraethylene glycol diacrylate as a crosslinking agent, had so excellent thermoformability as to have 0 R of an angle between folded sheets in the thermoformability evaluation, excellent elongation properties, and the like, but the compositions for an artificial marble of Comparative Examples 6 and 7, which used each conventional crosslinking agent such as trimethylolpropane trimethacrylate and polyethylene glycol di(meth)acrylate oligomer, exhibited significantly deteriorated thermoformability and elongation properties, compared with the examples.

In addition, Comparative Examples 1 and 2 using the acrylic resin syrup in a small amount or an excessive amount had difficulties in injection molding, making it impossible to measure thermoformability and elongation properties, Comparative Examples 3 and 4 using the (B) first aluminum hydroxide and the (C) second aluminum hydroxide out of the weight ratio of 7:3 to 9:1 and Comparative Example 5 using tetraethylene glycol diacrylate in an excessive amount exhibited deteriorated thermoformability and elongation characteristics, compared with the examples, which were confirmed through Tables 1 and 2. These results confirms that the composition for an artificial marble including the (A) acrylic resin syrup, the (B) first aluminum hydroxide having an average particle diameter of 75 to 92 µm; the (C) second aluminum hydroxide having an average particle diameter of 20 to 35 µm; and (D) tetraethylene glycol diacrylate within each specific weight range according to an embodiment may further improve thermoformability and elongation properties of an artificial marble manufactured therefrom.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

## Claims

1. A composition for an artificial marble, comprising
(A) an acrylic resin syrup;
(B) a first aluminum hydroxide having an average particle diameter of 75 to 92 µm;
(C) a second aluminum hydroxide having an average particle diameter of 20 to 35 µm; and
(D) tetraethylene glycol diacrylate.

2. The composition for an artificial marble of claim 1, wherein
the (A) acrylic resin syrup comprises an acrylic monomer and a polymer of the acrylic monomer.

3. The composition for an artificial marble of claim 2, wherein
the (A) acrylic resin syrup comprises a polymethylmethacrylate resin and a methylmethacrylate resin.

4. The composition for an artificial marble of claim 3, wherein
a concentration of the polymethylmethacrylate resin is 20 to 29 wt% based on 100 wt% of the (A) acrylic resin syrup.

5. The composition for an artificial marble of claim 3 or claim 4, wherein
a weight average molecular weight of the polymethylmethacrylate resin is 50,000 to 150,000 g/mol.

6. The composition for an artificial marble of any one of claim 1 to claim 5, wherein
a weight ratio of the (B) first aluminum hydroxide to the (C) second aluminum hydroxide is 7:3 to 9:1.

7. The composition for an artificial marble of any one of claim 1 to claim 6, wherein
the composition for an artificial marble comprises,
based on 100 wt% of the composition for an artificial marble,
30 to 40 wt% of the (A) acrylic resin syrup;
40 to 60 wt% of the (B) first aluminum hydroxide having an average particle diameter of 75 to 92 µm;
8 to 20 wt% of the (C) second aluminum hydroxide having an average particle diameter of 20 to 35 µm; and
0.05 to 0.2 wt% of the (D) tetraethylene glycol diacrylate.

8. The composition for an artificial marble of any one of claim 1 to claim 7, wherein
the composition further comprises at least one additive selected from an initiator, a coupling agent, a surfactant, a curing accelerator, an antistatic agent, an antimicrobial agent, a defoaming agent, a dispersing agent, a molecular weight regulator, an ultraviolet absorber, and a colorant.

9. An artificial marble manufactured from the composition for an artificial marble of any one of claim 1 to claim 8.

10. The artificial marble of claim 9, wherein
the artificial marble has an angle of 0 between folded sheets as measured by heating a specimen measuring 400 mm in length, 50 mm in width, and 12 mm in thickness in an oven at a temperature of 150 °C for 15 minutes and then pressing it with a press for 3 minutes until it is completely folded in half.

11. The artificial marble of claim 9 or claim 10, wherein
the artificial marble has an elongation of greater than or equal to 23% as measured according to ASTM D638.
